# EUROPEAN PATENT SPECIFICATION

(11) **EP 0 742 054 B1**
(45) Date of publication and mention of the grant of the patent: **14.11.2001**
(21) Application number: 96107171.9
(22) Date of filing: 07.05.1996
(51) Int. Cl.: B21D 5/02, B25J 9/16, B21D 43/10

(54) **Master-slave apparatus for the manipulator of a bending press**
Master-slave Steuerung für den Manipulator einer Abkantpresse
Dispositif de commande maître-esclave pour le manipulateur d'une presse plieuse

(30) Priority: 11.05.1995 IT MI950955
(43) Date of publication of application: 13.11.1996
(73) Proprietor: ANTIL S.r.l., 20098 San Giuliano Milanese (MI) (IT)
(72) Inventor: Zanella, Paolo, 20100 Milan (IT); Fazzi, Alberto, 20100 Milan (IT)
(74) Representative: Coloberti, Luigi

(56) References cited:
- EP-A- 0 555 908
- US-A- 4 594 870
- PATENT ABSTRACTS OF JAPAN vol. 018, no. 411 (M-1648), 2 August 1994 & JP-A-06 122025 (KOMATSU LTD), 6 May 1994,
- PATENT ABSTRACTS OF JAPAN vol. 018, no. 217 (M-1594), 19 April 1994 & JP-A-06 015370 (AMADA CO LTD), 25 January 1994,

## Description

The present invention relates to an automatic metal-sheet bending unit comprising a bending press and a manipulator, by means of which it is possible to perform, correctly and entirely automatically, press bending operations by gripping, loading in the press, bending and unloading any kind of sheet metal parts, and by providing the manipulator control unit with control data co-related to the working movements of the press; furthermore the bending unit according to the invention, allows the manipulator to participate in a positive manner in supporting and moving each metal sheet positioned with a bending die assembly, during the entire bending operation of the press.

### STATE OF THE ART

The press-bending technology for medium or small-sized batches of metal sheets, practically used in all machines presently on the market, in general involves the use of a bending press provided with a bending die assembly comprising a die member having a shaping groove and a bending tool movable in relation to and designed to penetrate into the groove of the die member so as to bend a metal sheet positioned between them. Metal-sheet bending presses are well-known machines and hence a detailed description thereof will be omitted, providing just an illustration and a description of the essential parts of a press suitable for the present invention; an automatic bending press is however described, for example, in US-A-4,486,841, to which any reference should be made.

A press-bending operation usually require the manual positioning of a metal sheet within the die assembly by an operator, using suitable mechanical stoppers in order to determine an exact position of the metal sheet within the die before activating the press by a manual or foot control device.

During a bending operation, a ram or linear actuator moves a bending tool towards the die member, or vice versa, causing the metal sheet to penetrate into the die groove over a calculated depth, until the bending operation has been completed; at the end of bending, the operator manually remove the bent sheet and repeat a new bending operation on the same or on other metal piece.

There are two critical moments during a bending operation:
- positioning of the metal sheet between the bending tool and the die member of the die assembly;
- manually accompanying of the metal sheet by the operator in order to support it during the bending operation, preventing the metal sheet from flapping.

The first is the critical one owing to the precision which must be obtained during manual positioning, on which the dimensional accuracy of the finished product directly depends. The second one is critical owing to the need to assist in a skilful manner the movement of the metal sheet while it is being bent, otherwise badly formed folds or convexities which are unacceptable both from a qualitative and aesthetic point of view may occur in the finished product.

From the point of view of safety, moreover, a manual bending process has serious shortcomings because the operator is required to act without any protection between the tool and the die member of the press, during which very high forces, normally of the order of ten, twenty or more tonnes, are generated.

The operator is therefore exposed to serious hazards both during positioning of the metal sheet and during the bending operation. In an attempt to achieve acceptable working conditions, the speed of the bending tool has been significantly reduced so as to remain at very low values, resulting in a limitation of the productivity of the bending press.

The dependency on the skill of the operator as regards the successful production of press-bent pieces and the risks to which the operator is exposed, in general result in great difficulties in finding specialized labour and in the high manufacturing costs.

In order to overcome these drawbacks, the development of suitable automatic manipulators and numerically controlled bending presses has resulted in some attempts to provide automated work stations for bending of medium- to small-sized batches.

The limitation of such applications, however, consists in the difficulty of programming two different control systems, such as the press and manipulator ones, as well as the impossibility for the manipulator to accompany and substain in a "positive" and appropriate manner the metal sheet as it moves during a bending operation.

This limitation is implicitly determined by the concept of using two machines which in operation are not controllably related with one another and which are working at the same time on a same metal piece. The long time required for programming two different machines, and the inaccuracy in accompanying of the metal sheet, further limit the use of these systems to particular applications where there are limited requirements as regards the flexibility and quality of the finished product.

Other attempts have resulted in the development of automatic manipulators integrated with a bending press, as for example illustrated in the European patent application EP-A-0,555,908; these systems, however, have proved to be extremely restrictive in terms of flexibility, making it impossible to use the press manually in the event of a malfunctioning of the manipulator, while still having the limitations and programming difficulties typical of the prior systems.

In particular, EP-A-0,555,908 describes a bending device which uses a multiple-axis manipulator, the processing unit of which is programmed with an algorithm for calculating the ideal movement path of the metal sheet; although the document does not provide any indication as to the type of algorithm to be used, the latter must nevertheless be such that the movement of the manipulator occurs theoretically in a manner which is co-related to the movement of the said metal sheet caused by the bending tool when penetrating into the groove of the die member. A force sensor associated with the gripping member of the manipulator will act during bending, supplying the manipulator with a reaction signal in order to compensate for differences between the theoretical path provided by the calculation algorithm and the real path of the metal sheet. In this way it would be possible to maintain a constant reference value for the gripping point: on the metal sheet with respect to the axes of the manipulator, preventing the occurrence of stresses in the metal sheet caused by possible differences in the calculated path for the manipulator.

Although this document proposes the use of a programmed manipulator to follow the metal sheet during bending, in practice the principle on which the device operates involves a "passive" behaviour of the manipulator in the bending process, since the latter is intended to simply perform the function of following and adapting the theoretical path of the metal sheet, defined by the calculation algorithm, to the real path, with the sole aim of preventing altering or losing of the reference position for the gripping point of the metal sheet with respect to the axes of the manipulator.

This solution, which suffers from the same limitations and programming difficulties as the prior systems, also involves the risk of introducing, nevertheless, stresses which may damage the metal sheet, causing wrinkles at the edge of the tool or undesirable convexities, since in a normal bending process which can be performed both manually and automatically it is necessary to take into account the need for accompanying and in some cases forcing the movement of the said metal sheet, in order to avoid the occurrence of wrinkles or deformations in the finished part.

US-A-4 594 870 discloses a bending apparatus comprising a bending machine for bending a metal sheet and a gripper for holding the metal sheet and provided with a single control unit to calculate the follow-up position of the gripper and to control its displacement in order to make the gripper follow up the displacement of the metal sheet caused by bending.

All the attempts made hitherto have therefore not provided an adequate solution to the problem of bending metal sheets; furthermore, in general presses have been used having movement of the upper tool, so as to keep the metal sheet at a standstill on the underlying die until the bending operation of said metal sheet has been started; the application thereof to presses with movement in the bottom part has hitherto been neglected, or it has been considered impossible or difficult to put into practice.

### SUMMARY OF THE INVENTION

The general object of the present invention is to automatize the bending process, but using a master slave manipulator in combination with or comprising an intelligent electronic control device which can be suitably programmed in a simple manner and in a relatively short time so as to ensure an interlocked operation of any manipulator with any type of bending press; the invention departs from an entirely different principle, whereby the manipulator is operated not only so as to ensure a given movement path of the metal sheet while the latter is being bent, but also so as to participate "positively" in the said bending process, forcing the metal sheet to move rigidly, in a operating mode and following a geometrically predetermined path such as to avoid the formation of convexities or the occurrence of wrinkles on the metal sheet at the edge of the die.

In particular the invention has the object of automating any type of bending press via an easily and rapidly programmable electronic control device, by means of which it is possible to positively co-relate the working of a programmable manipulator to a bending press for automatically supplying the press with the metal sheets to be bent, and to positively accompany them during any bending operation, performing automatic loading and unloading of the metal pieces.

Unlike the previously known solutions, application of the invention can be extended equally well to presses both with a movable upper part and with a movable lower part of the die assembly.

A further object is to provide a combination of a bending press and a manipulator which are operationally interlocked by means of a control device so as to allow the free use of the press by an operator, without having to remove the manipulator, in order to manually bend individual pieces or test pieces, or use the press manually in the case of a malfunction of the said manipulator.

The invention finally, allows to modify programming of the manipulator via the use of a function dedicated to bending, so as to allow a rapid programming for new pieces and rapid production change-overs between one batch and another.

The above can be achieved by means of an automatic metal-sheet bending unit, according to Claim 1.

In particular, according to the present invention, a master-slave electronic control apparatus has been provided for slave operation of a multi-axis manipulator in respect to a bending press, the control apparatus comprising a main processing unit and program means operationally connected to a processing unit of the manipulator to keep the metal sheet gripped at a predetermined point, and to constantly define the coordinates of the real path of any point on the metal sheet, as a function of the continuously detected position of the movable part of the bending die assembly, maintaining an alignment of the gripping point on the metal sheet by the manipulator, the bending point inside the groove of the bending die assembly and a contact point where the metal sheet makes contact with an edge of the die assembly which is intermediate between said gripping and said bending points.

### BRIEF DESCRIPTION OF THE DRAWINGS

The principles of the invention and a preferred embodiment thereof will be described in greater detail hereinbelow with reference to the accompanying drawings, in which:
- Fig. 1: is a cross-sectional view of the bending unit comprising a bending press operationally interlocked with a manipulator by an electronic servo-control apparatus according to the present invention;
- Fig. 2: is a functional block diagram of the electronic control device of Figure 1;
- Figs. 3, 4, 5 and 6: show several operating phases during a bending process of a metal sheet: in particular they show the position of the manipulator with respect to the press with the bending tool and die member in open condition (Fig. 3); with the tool and die member at the beginning of the bending operation (Fig. 4); with the tool and die member during an intermediate bending condition (Fig. 5); and with the tool and die member at the end of the bending stroke (Fig. 6);
- Fig. 7: is a diagram illustrating the operations involving presetting of the press and programming of the manipulator;
- Fig. 8: is a diagram illustrating the operations involved in the execution of a bending operation;
- Fig. 9: shows the geometric diagram for the movement of the metal sheet;
- Fig. 10: shows the position of the metal sheet at a random moment during bending.

### DETAILED DESCRIPTION OF THE INVENTION

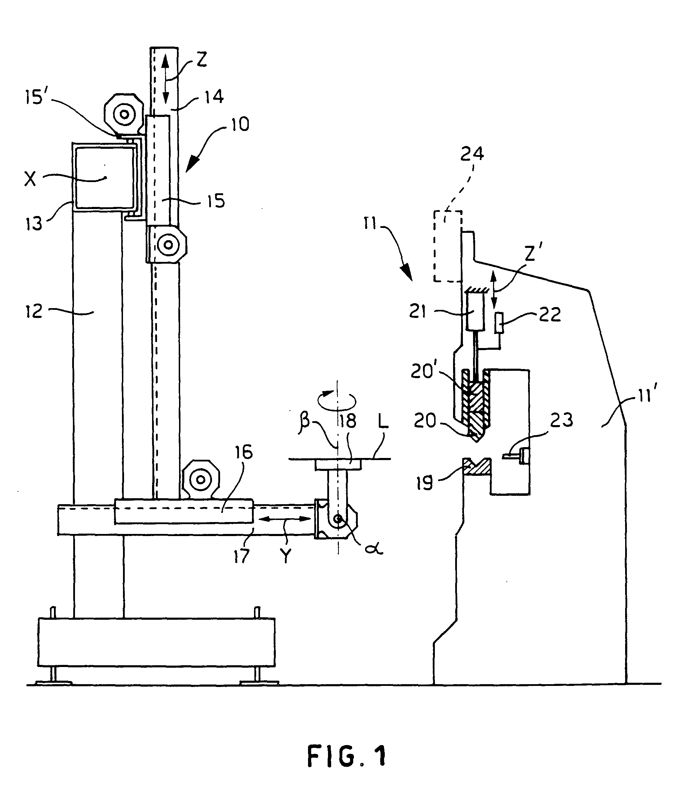

Figure 1, shows the assembly of a multiple-axis manipulator 10, for example of portal frame-type cartesian manipulator and a bending press 11.

In the example shown, the manipulator 10 comprises a portal frame having two side columns 12 and an upper cross-beam 13 defining an horizontal axis X for the manipulator, which is one of a set of three linear cartesian axes X, Y, Z, in which the vertical axis Z is defined by a vertical upright 14 longitudinally sliding inside a vertical guide 15 fastened to a carriage 15' in turn movable on the cross-beam 13 of the portal frame, along the axis X. At the bottom end of the vertical upright 15 a horizontal guide 16 has been provided for sliding a beam 17 defining the horizontal axis Y of three cartesian axes mentioned above; a gripping member 18 for gripping the metal sheet is pivotally and rotatably supported at the front end of the beam 17, to angularly orientate the metal sheet L on rotational axes a and β. The three axes X, Y and Z are suitably adjustable lengthwise and powered in a manner known per se so as to define any spatial coordinate for the gripping member 18. From Figure 1 it can be noted, moreover, that the gripping member 18 is supported at the front end of the beam 17 so as to rotate about two powered axes α and β parallely arranged to or coincident with the axes X and Y of the manipulator, which enable the gripping member 18 to rotate about itself and/or parallel to the bending plane of the metal sheet L.

All the axes X, Y and Z as well as α and β of the manipulator 10 are therefore suitably powered and controlled by a programmable control unit or CPU 32 for normal operation of the manipulator.

The press 11 in turn comprises a C shaped frame 11' provided with a die assembly 19, 20 horizontally extending in the direction of axis X; more precisely, the die assembly comprises a bottom die member 19 provided with a longitudinal V-shaped groove detachably fixed to a cross-beam of the press frame 11, and an upper pressing tool 20 detachably fixed to a slider 20' guided between front and rear plates in the top part of the press, which is suitably connected by a ram member to an hydraulic actuator 21, so as to be moved vertically along an axis Z' parallel to the axis Z of the manipulator 10, and coinciding with the travel direction of the pressing tool 20 which in this way can be moved between a retracted position where the die assembly is open, and a totally advanced position, in which the tool 20 penetrates into the groove cavity of the die member 19 depending on the position of adjustable abutment members inside the press itself.

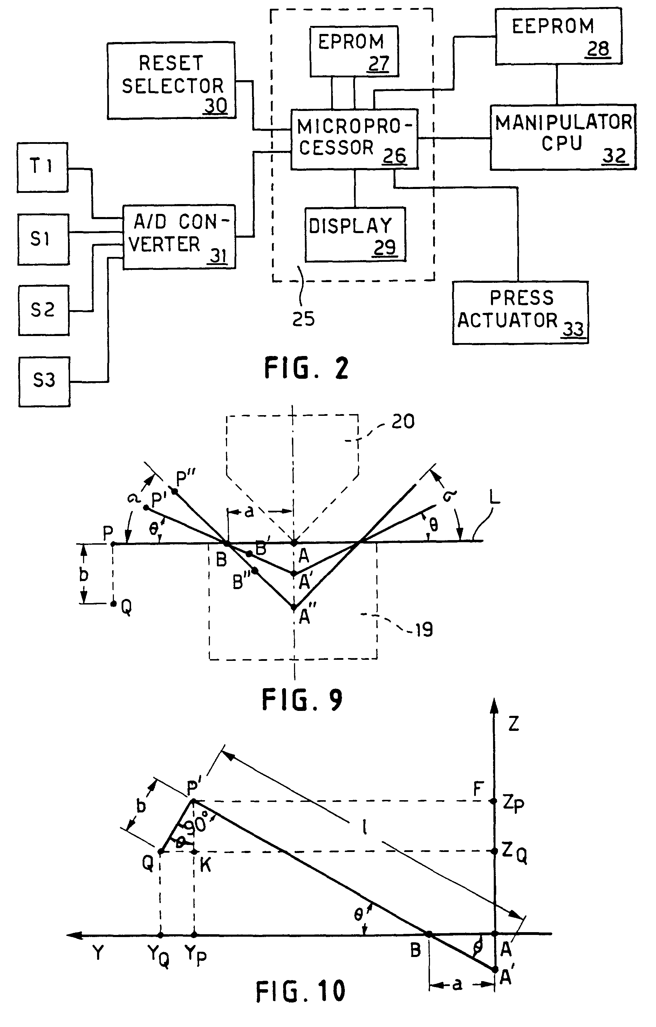

In Figure 1, reference 22 denotes moreover a signal-generator, of absolute and linear type, the slider member of which is mechanically links to the movable ram of the tool 20 to supply reference signals indicative of the positions assumed by the tool 20 during its forward movement along a vertical axis Z' laying, for example, within the symmetry plane of the pressing tool 20 or passing through the bottom end of the V-shaped groove of the die 19; reference 23 denotes moreover, in schematic form, one of the stop members for positioning of the metal sheet L within the die assembly inside the press 11; each of the front and side stop members comprises sensing means S1, S2 or S3 (Fig. 2) for detecting the metal sheet L for supplying a control signal indicative of the presence and correct positioning of the metal sheet L and for authorising the start of a bending operation, as explained further below.

Lastly, reference 24 in Figure 1 indicates the master-slave electronic control device which can be applied to the frame of the press 11 or perform part of the same manipulator.

The mechanical and functional configuration of the manipulator 10 may be of any kind: for example it may be a manipulator of the cartesian type or of the anthropomorphic type. A cartesian configuration of the manipulator is preferable in that it makes it possible to obtain, for this particular application, a high degree of operational flexibility and the possibility of performing, with the maximum freedom, folds both upwards and downwards depending on the arrangement of the bending die assembly and the features of the press itself. This operational freedom is due to the geometry of the Y axis on which the rotational axes α and β of the gripping member 18 are arranged, since it allows the maximum freedom of movement for the metal sheet during bending. Moreover, the gantry configuration of a cartesian manipulator 10 allows the press 11 to be freely used automatic or in manual mode by an operator, without having to remove the manipulator, so as to produce manually press-bent pieces, individually or as test pieces, or so as to be able to continue using the press with manual production in the event of a malfunction or defect of the manipulator.

The electronic control apparatus 24 which allows automation of the press-bending operation and an operation of the manipulator 10 linked to the press 11, as well as the mode of operation thereof, will be illustrated hereinbelow with reference to Figure 2 and the successive of the accompanying drawings.

From Figure 2 it can be noted that the control apparatus 24 comprises a processing unit 25 provided with a microprocessor 26 having a volatile RAM memory having stored a program means for controlling the manipulator 10, said program means comprising suitable algorithms or mathematic formula for computing the coordinates of the stroke length and rotation of the gripping member 18, in accordance with the movement path for the metal sheet L, by maintaining a rigid geometrical configuration of the metal sheet itself; computing algorithms are stored in a permanent memory 27, for example an EPROM memory connected to the microprocessor 26.

The control device 24 comprises moreover third memory means 28, which can be erased and programmed, for example an EEPROM memory, in which, at the start of processing, some variable calculation data may be programmed and stored, such as for example the maximum width of the V-shaped cavity of the die member, the zero point on the vertical axis Z' of the die, corresponding to the contact point or the start for the bending of the metal sheet in the press, from which the microprocessor 26 will calculate the coordinates for the path of the gripping point of the metal sheet as a function of the movement of the movable part of the die assembly, while rigidly maintaining a given geometrical configuration of the said metal sheet with respect to the movable axes of the manipulator during the movement imparted by a bending operation.

The device will also comprise a programming keyboard and a diagnostics display 29, as shown.

Still with reference to Figure 2, reference 30 denotes a manual reset selector connected to an input of the microprocessor 26, along with at least two frontal sensors S1 and S2 and a lateral sensor S3 corresponding to stop members 23 of Figure 1 for positioning of the metal sheet L, which are connected to respective inputs of the microprocessor 26 via an analog/digital converter unit 31.

Finally T1 denotes an absolute linear transducer or other linear signal generator, schematically indicated by reference 22 in Figure 1, which is designed to supply the microprocessor 26 with a tracking signal indicative both of the zero point which can be set by means of the selector 30, and the positions assumed by the movable part 20 of the bending die assembly with respect to the reference axis Z' referred to above. The data output of the microprocessor 26 of the master-slave electronic control apparatus is in turn connected by means of a serial communication line to a data input of the CPU 32 of the manipulator, so as to impart to the axes of the latter movements calculated on the basis of the programming algorithms of the microprocessor 26.

As referred to above, the sensors S1, S2 and S3 and the transducer T1 are arranged on the press 11 and are connected to the data input of the microprocessor 26; the sensors S1, S2 and S3 are necessary in order to determine the exact position of the metal sheet when it is placed by the manipulator 11 on the die 19 of the bending die assembly, so as to position it precisely within the press.

In order to carry out a reset operation, the operator must manually arrange the first metal sheet in the correct position for starting the bending operation of the press, with the bending die assembly in open condition; then he will operate the foot pedal or a manual control of the press in order to determine the initial contact point of the tool 20 with the metal sheet L which has been inserted into the press. At this point by activating the key-operated button suitably provided on the control panel 24 on the press, he will store in the EEPROM 28 of the microprocessor the position Z'=0 or the start point for bending of the metal sheet.

In order to perform bending operations in automatic mode, both the manipulator must be initially programmed and the press prepared in a precise manner, adopting the same procedures as those used for bending with manual slave operation: if the press is provided with a numerical control device, the latter will be programmed so as to produce the part manually.

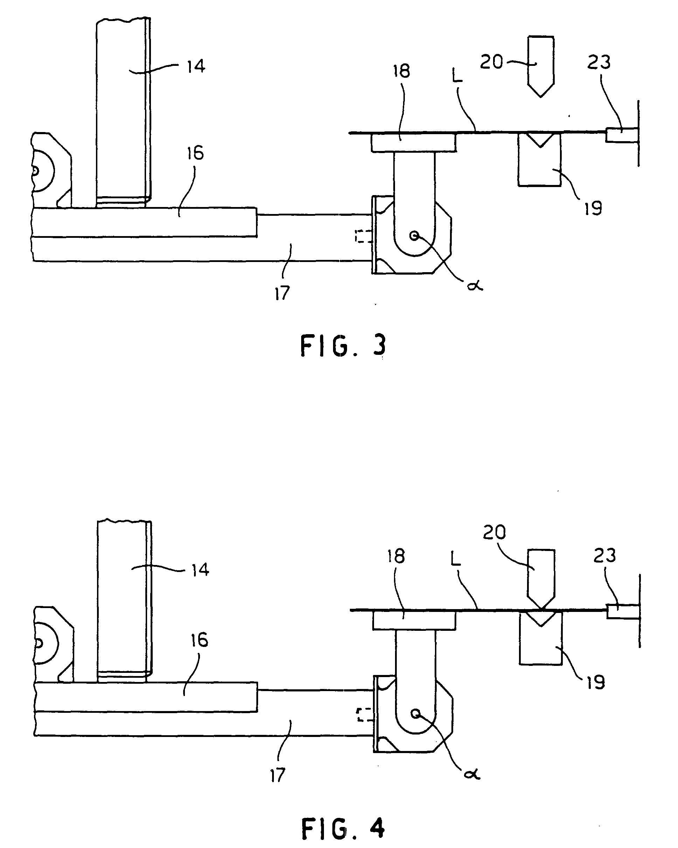

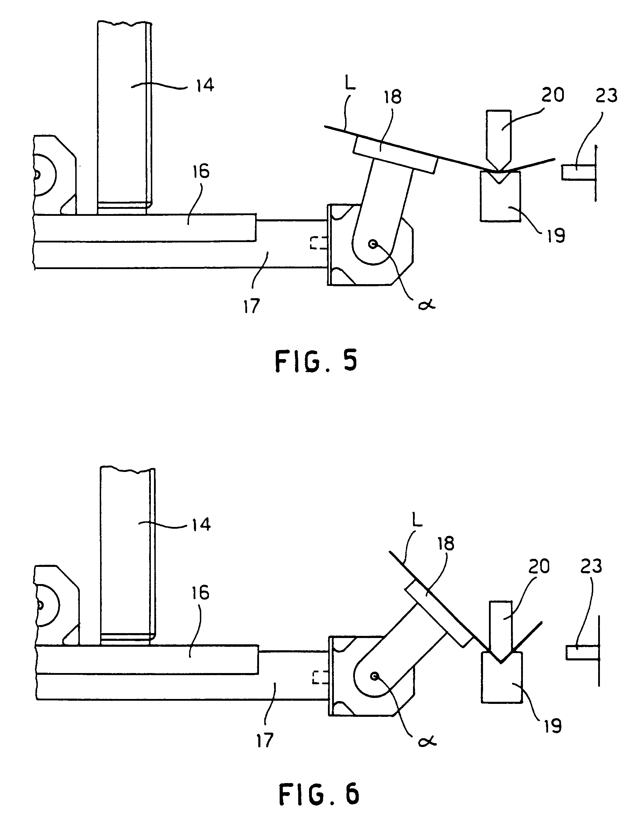

Generally speaking, a bending operation consists of the following steps:
a) picking up of a metal sheet by the manipulator and positioning thereof on the die member 13 of the open die assembly (Figure 3);
b) closing of the press so as to bring the bending tool 20 into light contact with the metal sheet L, while the manipulator maintains the relative position of the metal sheet L on the die member 19 (Figure 4), an operation which is particularly necessary in presses with a movable die member;
c) bending of the metal sheet L with the manipulator which "positively" accompanies the metal sheet L during the movement imposed by the press (Figures 5 and 6), maintaining a rigid or coplanar configuration of the metal sheet itself. For the purposes of the present invention, the term "positive" is understood as meaning the capacity of the electronic servo-control apparatus to move the manipulator while gripping the metal sheet, in accordance with a movement pattern defined by the calculation and programming algorithms as a function of the movement of the movable part 20 of the die, so as to impose and maintain a constant geometrical configuration of the metal sheet L, avoiding any undesired deformation of the same;
d) re-opening of the press, removal of the bent piece by the manipulator and, where necessary, repositioning thereof for the execution of another fold or for final unloading.

### SETTING OF THE PRESS AND PROGRAMMING OF THE MANIPULATOR

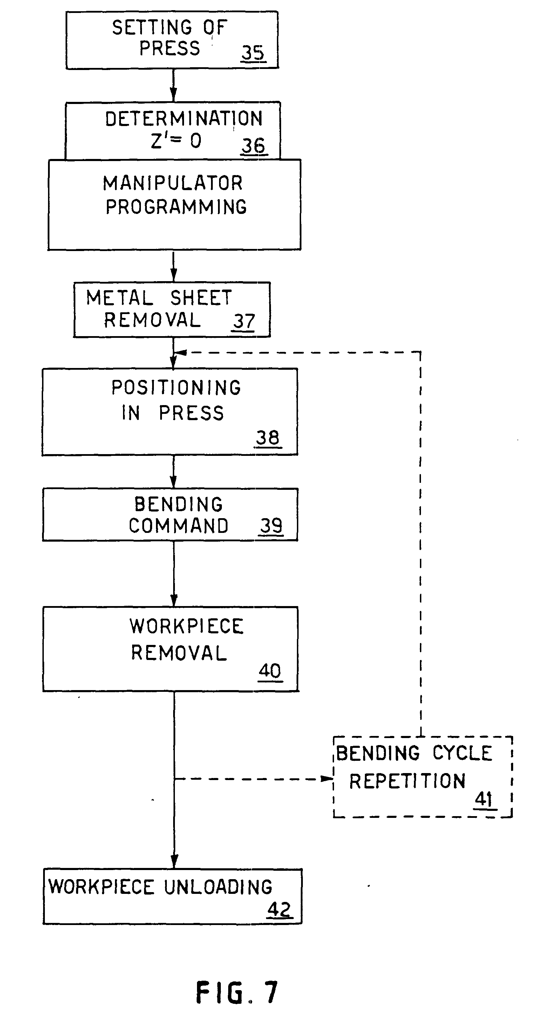

The diagram in Figure 7 shows in detail the operations necessary for pre-setting the press and for initial programming of the CPU or manipulator control unit 32 in accordance with the operations which can be performed automatically by the said manipulator during bending.

As shown in Figure 7, it is necessary to perform initially a setting operation (step 35), in order to determine the exact sequence of movements of the press, followed by a reset operation (step 36) for determining the reference point Z'=0 on the axis Z' of the die assembly. After completing the press setting operation, it is then possible to perform the programming of the manipulator, supplying its control unit 32 with all the information and data necessary for performing automatically the picking-up of the metal sheet (step 37), positioning of the metal sheet in the press by moving along the X and/or Y axes of the manipulator (step 38) stopping against the positioning sensors S1, S2 and/or S3; at the end of this operation said sensors supply a signal indicative of the correct positioning. The metal-sheet positioning operation is followed by an operation involving keying-in of the bending command (step 39) as well as that of removal of the bent piece from the press (step 40) or, if necessary, repetition of the bending cycle (step 41), followed by final unloading (step 42).

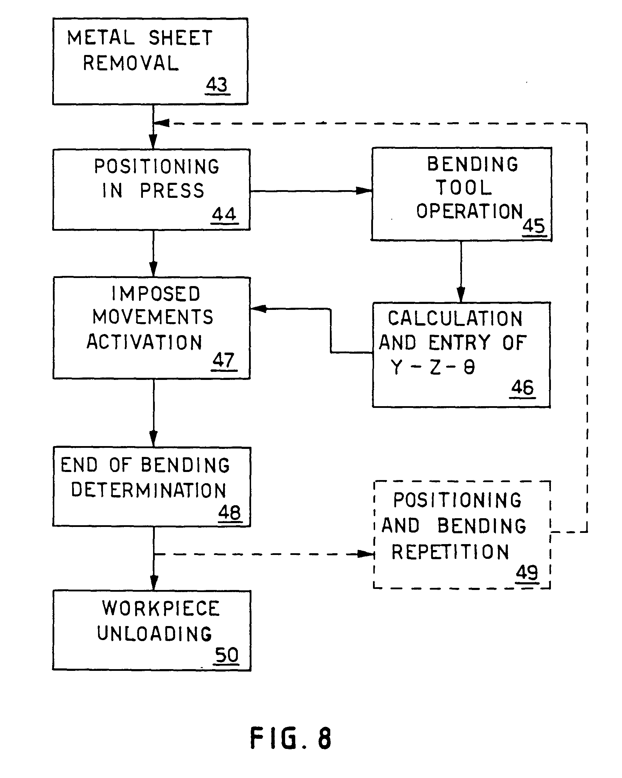

With reference now to the diagram shown in Figure 8 and to the preceding Figures 3 to 6, a description is given of the operations performed automatically in order to carry out a bending operation with the manipulator and the bending press operationally enslaved by means of the electronic control unit of the bending unit according to the invention.

The bending operation therefore consists of the following steps illustrated in the diagram shown in Figure 8:
Step 43 - the metal sheet L is initially picked-up by the manipulator which, under the control of its CPU, positions said sheet facing the press with the bending die assembly in the open condition (Figure 3);
Step 44 - during this step the manipulator, on the basis of its working program, automatically positions the metal sheet L on the die member 20 of the press against the front stop sensors S1 and S2. When the metal sheet L is correctly positioned against the sensors S1 and S2, the latter supply the microprocessor 26 of the electronic control apparatus with a signal enabling operation of the actuator 21 which, initially, according to the example shown in Figure 1, performs closing of the press by causing the downward movement of the upper tool 20 as far as the point Z'=0 where contact is made with the metal sheet L: step 45 and Figure 4.
Step 46 - the RAM memory of the microprocessor 26 in the meantime has been programmed by the EPROM 27 with the algorithms for calculating the path of the gripping point P on the metal sheet, as well as with the variable data relating to the point Z'=0 on the axis of the tool 20 and the value of the width of the V-shaped groove of the die member 19, said values being contained in the EEPROM memory 28; the microprocessor calculates the data for the path of the metal sheet, relaying them to the CPU of the manipulator.
Step 47 - during this step, bending of the metal sheet is performed with the manipulator which positively accompanies the metal sheet L during the movement imposed by the press, thus maintaining a rigid configuration and a planar condition of the metal sheet, as shown in Figures 5 and 7 and as will be explained in greater detail below.

In order to define the bending step, a distinction must be made between presses with movement of the upper part and presses with movement of the lower part. In presses with movement of the upper part, when the value Z'=0 is reached, the electronic control apparatus 25 starts to relay to the manipulator the correct coordinates of the axes Z, Y and α in order to accompany the metal sheet during bending until said operation has been completed.

In presses with movement of the lower part, the electronic control apparatus initially relays only the coordinates of the Z axis, the Y and α coordinates remaining constant until the metal sheet comes into contact with the tool, and then proceeds in exactly the same manner described above.

Step 48 - the end of the bending operation occurs with the axis Z' of the transducer at a standstill; at this point it is possible to repeat one or more positioning and bending cycles (step 49), maintaining the manipulator's grip on the metal sheet, until final unloading (step 50).

With reference to Figures 9 and 10, a description is given below of the formulae relating to the algorithms used to calculate the coordinates of the path of the metal sheet, in particular its gripping point, during a bending operation, in accordance with the principles of the present invention.

Figure 9 shows the geometrical diagram of the metal sheet's movement, in the initial condition, while Figure 10 shows the position of the metal sheet at a random moment during execution of the fold; from these figures it can be noted above all that a concentrated load condition is assumed to exist, i.e. with the tool 20 having a zero radius of curvature at the vertex and with the metal sheet having infinite rigidity except along the bending line which it is assumed forms an ideal plastic hinge.

The thickness of the metal sheet is considered to be negligible, with frictionless contact of the said metal sheet on the die assembly during bending.

In Figure 9 the various symbols have the following meaning:
- L =: Initial position of the metal sheet on the die 19, prior to bending, with a location coplanar with the Y axis.
- P =: Generic point on the metal sheet, in particular gripping point, whose path coordinates are to be calculated, said coordinates being expressed as a function of the coordinates of a point Q on the rotational axis a of the gripping member, parallel to the generatrix of the bending die; P' = generic intermediate position of P, and P" = position of P at the end of bending.
- Q =: Point of rotation of the gripping member
- A =: Initial contact point of the tool with the metal sheet L; A' = generic position of A, and A" = position of A at the end of bending coinciding with the bottom of the groove of the die member 19.
- B =: Initial contact point of the metal sheet with a lateral edge of the die member 19; the points B' and B" indicate instead an intermediate position and the final position of the original point B on the metal sheet, owing to the displacement with respect to the die.
- σ =: Angle formed by the side of the V-shaped cavity of the die with the axis Y, in the case of a symmetrical die.
- θ =: Variable angle of the metal sheet with respect to the axis Y, during bending.
- a =: Parameter to be included in the calculation algorithms, defining the maximum width of the V-shaped groove of the die member.
- b =: Distance between P and Q perpendicular to the metal sheet.

As can be noted from Figure 9, the metal sheet L initially lies horizontally on the die 19; as soon as the tool 20, after being positioned at A, starts to penetrate into the groove cavity of the die 19, assuming the infinite rigidity of the metal sheet and the plastic flexibility at the said bending point A, the metal sheet will bend, sliding on the edge of the die at B, taking A the intermediate positions A' until it assumes the final configuration defined by A". The point P will gradually pass to P' and as far as P". On the basis of the assumptions made, therefore, the metal sheet will rigidly maintain a planar configuration or constant alignment of the gripping point P, bending point A and contact point B with the lateral edge of the die.

On the basis of Figure 10 it is now possible to establish the equations for calculating the coordinates Z, Y and θ which determine the movement path of the metal sheet during bending.

The coordinates of P and Q are indicated by Zₚ and Z_{q} on the axis Z; from Figure 10 we can obtain Zₚ - Z_{q} = $\overline{\text{PK}}$ which represents the calculation data variable with rotation.

By applying the known rules of trigonometry, we obtain:$\text{tg θ =} \frac{\overline{\text{QK}}}{\text{PK}} \text{whence} \overline{\text{PK}} \text{=} \frac{\overline{\text{QK}}}{\text{tg θ}}$

$\overline{\text{AA}}$' being the calculation data which varies according to the displacement of the tool 20 inside the cavity of the die 19, from the right-angled triangle AA'B we obtain:$\overline{\text{AA}} \text{' = a tg θ}$ from which it is possible to derive the first algorithm for calculating the angle θ as a function of the position of the tool$\text{tg θ =} \frac{\overline{\text{AA}} \text{'}}{\text{a}}$ whence 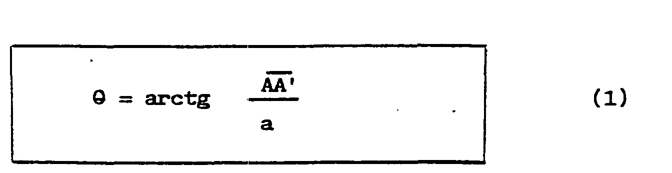 considering the above expressions, we obtain:${\text{Z}}_{\text{p}} {\text{- Z}}_{\text{q}} \text{=} \frac{\overline{\text{QK}}}{\text{tg θ}}$ $\overline{\text{QK}}$ = Y_{q} - Yₚ, we obtain:

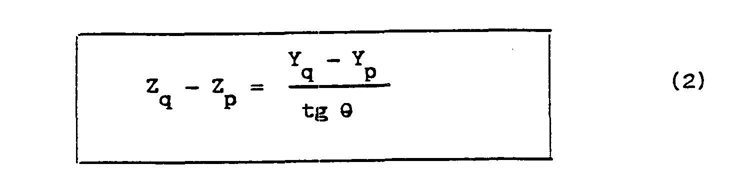

If the known Pythagorean theorem is applied to Figure 10, we obtain:$\text{(} \overline{\text{PK}} {\text{)}}^{\text{2}} \text{+ (} \overline{\text{QK}} {\text{)}}^{\text{2}} {\text{= b}}^{\text{2}}$ with $\overline{\text{PK}}$ = Zₚ - Z_{q} and $\overline{\text{QK}}$ = Y_{q} - Yₚ, the above equation can be written as follows:${\text{(Z}}_{\text{p}} {\text{- Z}}_{\text{q}} {\text{)}}^{\text{2}} {\text{+ (Y}}_{\text{q}} {\text{- Y}}_{\text{p}} {\text{)}}^{\text{2}} {\text{= b}}^{\text{2}}$ assuming${\text{Δ Z= Z}}_{\text{q}} {\text{- Z}}_{\text{p}}$ and${\text{Δ Y= Y}}_{\text{q}} {\text{- Y}}_{\text{p}}$ we obtain:${\text{Δ Z}}^{\text{2}} {\text{+ ΔY}}^{\text{2}} {\text{= b}}^{\text{2}}$ from which the following equation is derived:${\text{Δ Y}}^{\text{2}} {\text{= b}}^{\text{2}} {\text{- ΔZ}}^{\text{2}}$

Substituting the values of Δ Z and Δ Y, the equation (2) can be rewritten as follows:$\text{Δ Z =} \frac{\text{Δ Y}}{\text{tg θ}}$ whence${\text{Δ Z}}^{\text{2}} \text{=} \frac{{\text{Δ Y}}^{\text{2}}}{{\text{(tgθ)}}^{\text{2}}}$ from the equation (2), we obtain:${\text{Δ Y}}^{\text{2}} {\text{= b}}^{\text{2}} {\text{- ΔZ}}^{\text{2}}$ whence${\text{Δ Z}}^{\text{2}} \text{=} \frac{{\text{b}}^{\text{2}} {\text{- ΔZ}}^{\text{2}}}{{\text{(tg θ)}}^{\text{2}}}$ continuing the calculation, since the terms of ΔZ² of the latter two equations are equal to each other, Δ Z² (tg θ)² = b² - ΔZ² is obtained, which, when resolved in respect to ΔZ², gives the following:$\text{ΔZ = ±} \frac{\text{b}}{\sqrt{{\text{(tg θ)}}^{\text{2}} \text{+ 1}}}$ As already mentioned, from Figure 10 we also obtain:$\text{tg θ =} \frac{\overline{\text{AA}} \text{'}}{\text{a}}$ substituting this value in the previous equation gives the following:$\text{Δ Z = ±} \frac{\text{b}}{\sqrt{\text{(} \frac{\overline{\text{AA}} \text{'}}{\text{a}} {\text{)}}^{\text{2}} \text{+ 1}}}$ remembering that ΔZ = Z_{q} - Zₚ, discarding the sign + since Zₚ > Z_{q}, we obtain:${\text{Z}}_{\text{q}} {\text{- Z}}_{\text{p}} \text{= -} \frac{\text{b}}{\sqrt{\text{(} \frac{\overline{\text{AA}} \text{'}}{\text{a}} {\text{)}}^{\text{2}} \text{+ 1}}}$ whence${\text{Z}}_{\text{q}} {\text{= Z}}_{\text{p}} \text{-} \frac{\text{b}}{\sqrt{\text{(} \frac{\overline{\text{AA}} \text{'}}{\text{a}} {\text{)}}^{\text{2}} \text{+ 1}}}$

It can be seen that ΔZ = - $\frac{\text{ΔY}}{\text{tgθ}}$ from which Δ Y = Δ Z tg θ is derived substituting Δ Z with the value previously calculated, we obtain:$\text{Δ Y =} \frac{\text{b}}{\sqrt{\text{(} \frac{\overline{\text{AA}} \text{'}}{\text{a}} {\text{)}}^{\text{2}} \text{+ 1}}} \text{tg θ}$ substituting, in this equation, the value of:${\text{Δ Y = Y}}_{\text{q}} \text{- Yp e tg θ =} \frac{\overline{\text{AA}} \text{'}}{\text{a}}$ the following equation can be expressed:

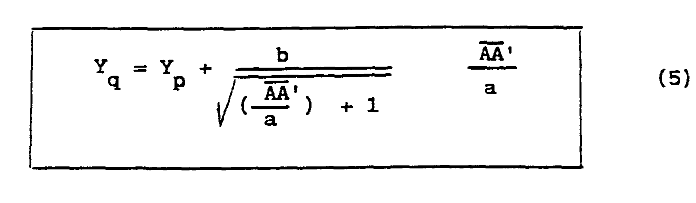

It is now required to obtain the values of Zₚ and Yₚ as a function of the variable $\overline{\text{AA}}$' in order to substitute them in the equations 4 and 5, thus obtaining the other two calculation algorithms required for programming the apparatus.

Still with reference to Figure 10, the following is obtained:${\text{Z}}_{\text{p}} \text{=} \overline{\text{FA}} \text{' -} \overline{\text{AA}} \text{'}$ being "l" the constant distance on the metal sheet between the gripping point P and the bending point A; as result of the known criteria of equality of triangles, the following is obtained:${\text{Z}}_{\text{p}} \text{= l sen θ -} \overline{\text{AA}} \text{'}$ from the triangle AA'B, the following is obtained:$\text{sen θ =} \frac{\overline{\text{AA}} \text{'}}{\overline{\text{A'B}}} \text{=} \frac{\overline{\text{AA}} \text{'}}{\sqrt{{\text{a}}^{\text{2}} \text{+} \overline{\text{AA}} {\text{'}}^{\text{2}}}}$ substituting the value of sen θ in the previous equation, we obtain:

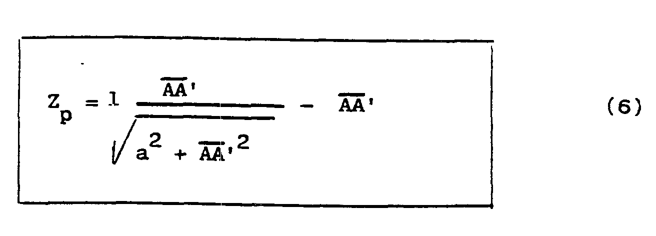

Proceeding in a similar manner for Yₚ, we obtain:

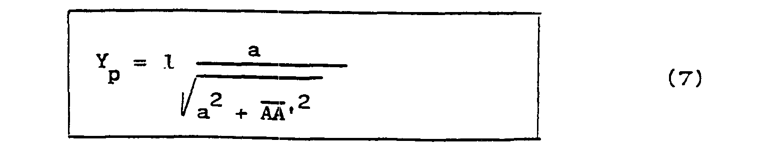

If (6) is substituted in (4) and (7) in (5), the coordinates Z_{q} and Y_{q} are obtained as a function of the parameter $\overline{\text{AA}}$' which varies during the bending. The three calculation algorithms, which express the coordinates of the point P as a function of the variable $\overline{\text{AA}}$', can be summarised as follows:$\text{θ = arctg} \frac{\overline{\text{AA}} \text{'}}{\text{a}}$${\text{Z}}_{\text{q}} \text{= l} \frac{\overline{\text{AA}} \text{'}}{\sqrt{{\text{a}}^{\text{2}} \text{+} \overline{\text{AA}} {\text{'}}^{\text{2}}}} \text{-} \overline{\text{AA}} \text{' -} \frac{\text{b}}{\sqrt{\text{(} \frac{\overline{\text{AA}} \text{'}}{\text{a}} {\text{)}}^{\text{2}} \text{+ 1}}}$${\text{Y}}_{\text{q}} \text{= l} \frac{\text{a}}{\sqrt{{\text{a}}^{\text{2}} \text{+} \overline{\text{AA}} {\text{'}}^{\text{2}}}} \text{+} \frac{\text{b}}{\sqrt{\text{(} \frac{\overline{\text{AA}} \text{'}}{\text{a}} {\text{)}}^{\text{2}} \text{+ 1}}} \text{·} \frac{\overline{\text{AA}} \text{'}}{\text{a}}$ in which "a" and "l" are typical constants of the bending die assembly and the distance of the gripping point P from A. The three algorithms mentioned above, which are stored in the processing unit 25, therefore enable the latter to calculate continuously the Z and Y coordinates of the gripping point P and the angle of rotation of the metal sheet, as a function of the linear displacement of the bending tool 19, and to send to the CPU of the manipulator corresponding control data so that the said manipulator follows in a positive manner the rigid movement of the metal sheet, by constantly maintaining the three points P, B and A rectilinearly aligned with each other. In this way the objects of the invention are achieved, avoiding the formation of wrinkles or damaging convexities in the metal sheet while it is being bent.

## Claims

1. An automatic metal-sheet bending unit comprising in combination:
a) a bending press (11) including a die assembly with top and bottom die members (20, 19) movably supported one in respect to the other along a vertical reference axis (Z'), to bent a metal-sheet (L) positioned between the die members (19, 20) of the press (11);
b) a signal generator (22) operatively connected to a movable one (20) of said die members (19, 20), to provide data signals corresponding to revealed vertical positions of the movable die member (20) along said reference axis (Z'), and in respect to a detected zero point, as well as sensoring means (S1, S2, S3) provided for precisely positioning the metal sheet (L) within the die members (19, 20) of the press (11);
c) a multi-axis (X,Y,Z,α,β) manipulator (10) including a programmable control unit (32), said manipulator (10) being provided with a movable gripping member (18) for gripping and supporting the metal-sheet (L) at a predetermined gripping point (P); and
d) an electronic control device (24) for slave connection of the manipulator (10) to the bending press (11), said electronic control device (24) having:
e) a programmable process unit (25) including a microprocessor (26) operatively connected to the control unit (32) of the manipulator, to the signal generator (22) and to the sensoring means (S1,S2,S3) of the bending press (11);
f) said programmable process unit (25) comprising program means (27) including calculation algorithms to provide the control unit (32) of the manipulator (10) with positioning data for the gripping member (18) in the form of data calculated from the data signals provided by signal generator (22), for moving the gripping member (18) to prevent a deflection of the metal-sheet (L) , thereby maintaining a rectilinear alignement of the gripping point (P) on the metal-sheet (L) and the points (A, B) where the metal-sheet (L) makes contact with the movable and stationary die members (20, 19) of the bending press (11).

2. An automatic metal-sheet bending unit according to Claim 1, in which use of a die assembly (19, 20) is made having generatrix line longitudinally extending to a groove cavity, **characterized in that** said calculation algorithms stored in said program means (27) define the coordinates of the gripping point (P) for the gripping member (18) and the angle of rotation (θ) of the metal sheet (L), in relation to a set of three cartesian axes (X, Y, Z), and a rotational axis parallel to the generatrix line of the bending die assembly, on the basis of the following formula:$\text{θ = arctg} \frac{\overline{\text{AA}} \text{'}}{\text{a}}$${\text{Z}}_{\text{q}} \text{= l} \frac{\overline{\text{AA}} \text{'}}{\sqrt{{\text{a}}^{\text{2}} \text{+} \overline{\text{AA}} {\text{'}}^{\text{2}}}} \text{-} \overline{\text{AA}} \text{' -} \frac{\text{b}}{\sqrt{\text{(} \frac{\overline{\text{AA}} \text{'}}{\text{a}} {\text{)}}^{\text{2}} \text{+ 1}}}$${\text{Y}}_{\text{q}} \text{= l} \frac{\text{a}}{\sqrt{{\text{a}}^{\text{2}} \text{+} \overline{\text{AA}} {\text{'}}^{\text{2}}}} \text{+} \frac{\text{b}}{\sqrt{\text{(} \frac{\overline{\text{AA}} \text{'}}{\text{a}} {\text{)}}^{\text{2}} \text{+ 1}}} \text{·} \frac{\overline{\text{AA}} \text{'}}{\text{a}}$ in which "a" is a parameter pre-stored in the process unit (25), indicative of the maximum width of the groove cavity of the bending die assembly (19, 20), and in which "l" is a constant value equal to the distance between the gripping point (P) of the metal sheet (L) and a contact bending point (A) at the beginning of bending of the same metal sheet (L).

3. An automatic metal-sheet bending unit according to Claims 1 and 2, **characterized in that** the parameter "a" indicative of the maximum width of the groove cavity of the bending die assembly (19, 20), and the zero point on the reference axis (Z') for the signal generator (22), from which displacement of the movable die member (20) is detected, during bending, are pre-stored in a programmable and erasable EEPROM memory of the process unit (32).

4. An automatic metal-sheet bending unit according to Claims 1 and 3, **characterized in that** a manually operable reset selector (30) is provided for resetting the press and for storing the detected zero reference point on the axis (Z') of the said signal generator (22) in the programmable memory (EEPROM) of the said process unit.

5. A automatic metal-sheet bending unit according to Claim 1, in which said manipulator is of cartesian type.

6. A automatic metal sheet bending unit according to Claim 1, in which the manipulator is of anthropomorphic type .

## Patentansprüche

1. Automatische Metallblech-Biegeeinheit, die in Kombination umfaßt:
a) eine Biegepresse (11), die eine Stempelbaueinheit mit oberen und unteren Stempelelementen (20, 19) enthält, die relativ zueinander längs einer vertikalen Bezugsachse (Z') beweglich unterstützt sind, um ein Metallblech (L), das zwischen den Stempelelementen (19, 20) der Presse (11) angeordnet ist, zu pressen;
b) einen Signalgenerator (22), der mit einem beweglichen (20) der Stempelelemente (19, 20) funktional verbunden ist, um Datensignale zu liefern, die ermittelten vertikalen Positionen des beweglichen Stempelelements (20) längs der Bezugsachse (Z') und in bezug auf einen erfaßten Nullpunkt entsprechen, sowie Sensormittel (S1, S2, S3), die dazu vorgesehen sind, das Metallblech (L) präzise in den Stempelelementen (19, 20) der Presse (11) zu positionieren;
c) einen mehrachsigen (X, Y, Z, α, β) Manipulator (10), der eine programmierbare Steuereinheit (32) enthält und mit einem beweglichen Greifelement (18) zum Greifen und Unterstützen des Metallblechs (L) an einem vorgegebenen Greifpunkt (P) versehen ist; und
d) eine elektronische Steuervorrichtung (24), die eine Slave-Verbindung zwischen dem Manipulator (10) und der Biegepresse (11) herstellt und besitzt:
e) eine programmierbare Prozeßeinheit (25), die einen Mikroprozessor (26) enthält, der mit der Steuereinheit (32) des Manipulators, mit dem Signalgenerator (22) und mit den Sensormitteln (S1, S2, S3) der Biegepresse (11) funktional verbunden ist;
f) wobei die programmierbare Prozeßeinheit (25) Programmittel (27) umfaßt, die Rechenalgorithmen enthalten, um der Steuereinheit (32) des Manipulators (10) Positionierungsdaten für das Greifelement (18) in Form von Daten, die aus den durch den Signalgenerator (22) bereitgestellten Datensignalen berechnet werden, zuzuführen, um das Greifelement (18) so zu bewegen, daß eine Krümmung des Metallblechs (L) verhindert wird, wodurch eine geradlinige Ausrichtung des Greifpunkts (P) auf dem Metallblech (L) und der Punkte (A, B), an denen das Metallblech (L) mit den beweglichen und unbeweglichen Stempelelementen (20, 19) der Biegepresse (11) in Kontakt gelangt, aufrechterhalten wird.

2. Automatische Metallblech-Biegeeinheit nach Anspruch 1, in der eine Stempelbaueinheit (19, 20) verwendet wird, die eine Erzeugenden-Linie besitzt, die longitudinal zu einem Nuthohlraum verläuft, **dadurch gekennzeichnet, daß** die Rechenalgorithmen, die in den Programmitteln (27) gespeichert sind, die Koordinaten des Greifpunkts (P) für das Greifelement (18) und den Drehwinkel (θ) des Metallblechs (L) in bezug auf eine Gruppe von drei kartesischen Achsen (X, Y, Z) und eine Drehachse parallel zur Erzeugenden-Linie der Biegestempel-Baueinheit anhand der folgenden Formeln definieren:$\text{θ = arctg} \frac{\overline{\text{AA'}}}{\text{a}}$${\text{Z}}_{\text{q}} \text{= l} \frac{\overline{\text{AA}} \text{'}}{\sqrt{{\text{a}}^{\text{2}} \text{+} {\overline{\text{AA'}}}^{\text{2}}}} \text{-} \overline{\text{AA'}} \text{-} \frac{\text{b}}{\sqrt{{\left(\frac{\overline{\text{AA'}}}{\text{a}}\right)}^{2} \text{+ 1}}}$${\text{Y}}_{\text{q}} \text{= l} \frac{\text{a}}{\sqrt{{\text{a}}^{\text{2}} \text{+} {\overline{\text{AA'}}}^{\text{2}}}} \text{+} \frac{\text{b}}{\sqrt{{\left(\frac{\overline{\text{AA'}}}{\text{a}}\right)}^{2} \text{+ 1}}} \text{·} \frac{\overline{\text{AA'}}}{\text{a}}$ worin "a" ein in der Prozeßeinheit (25) im voraus gespeicherter Parameter ist, der die maximale Breite des Nuthohlraums der Biegestempel-Baueinheit (19, 20) angibt, und worin "l" ein konstanter Wert ist, der gleich dem Abstand zwischen dem Greifpunkt (P) des Metallblechs (L) und einem Kontaktbiegepunkt (A) am Beginn des Biegens dieses Metallblechs (L) ist.

3. Automatische Metallblech-Biegeeinheit nach den Ansprüchen 1 und 2, **dadurch gekennzeichnet, daß** der Parameter "a", der die maximale Breite des Nuthohlraums der Biegestempel-Baueinheit (19, 20) angibt, und der Nullpunkt auf der Bezugsachse (Z') für den Signalgenerator (22), anhand dessen die Verschiebung des beweglichen Stempelelements (20) während des Biegens erfaßt wird, im voraus in einem programmierbaren und löschbaren EEPROM-Speicher der Prozeßeinheit (32) gespeichert sind.

4. Automatische Metallblech-Biegeeinheit nach den Ansprüchen 1 und 3, **dadurch gekennzeichnet, daß** eine manuell betätigbare Rücksetz-Wähleinheit (30) vorgesehen ist, die die Presse zurücksetzt und den erfaßten Null-Bezugspunkt auf der Achse (Z') des Signalgenerators (22) in dem programmierbaren Speicher (EEPROM) der Prozeßeinheit speichert.

5. Automatische Metallblech-Biegeeinheit nach Anspruch 1, in der der Manipulator vom kartesischen Typ ist.

6. Automatische Metallblech-Biegeeinheit nach Anspruch 1, in der der Manipulator vom anthropomorphen Typ ist.

## Revendications

1. Unité de pliage automatique de feuilles métalliques comprenant en combinaison:
a) une presse plieuse (11) incluant un ensemble de matrice comportant des éléments de matrice supérieur et inférieur (20, 19) supportés d'une manière déplaçable l'un par rapport à l'autre suivant un axe de référence vertical (Z'), pour plier une feuille métallique (L) placée entre les éléments de matrice (19, 20) de la presse (11);
b) un générateur de signaux (22) couplé activement à l'un (20) desdits éléments de matrice (19, 20) qui est déplaçable, pour générer des signaux de données qui correspondent à des positions verticales révélées de l'élément de matrice déplaçable (20) suivant ledit axe de référence (Z') par rapport à une origine détectée, ainsi qu'un moyen de détection (S1, S2, S3) prévu pour un positionnement précis de la feuille métallique (L) entre les éléments de matrice (19, 20) de la presse (11);
c) un manipulateur (10) à axes multiples (X, Y, Z, α, β) incluant un module de commande programmable (32), ledit manipulateur (10) étant muni d'un organe de préhension déplaçable (18) pour saisir et soutenir la feuille métallique (L) en un point de préhension (P) prédéterminé; et
d) un dispositif de commande électronique (24) pour asservir le fonctionnement du manipulateur (10) à la presse plieuse (11), ledit dispositif de commande électronique (24) comprenant:
e) un module de commande de processus programmable (25) incluant un microprocesseur (26) couplé activement au module de commande (32) du manipulateur, au générateur de signaux (22) et au moyen de détection (S1, S2, S3) de la presse plieuse (11);
f) ledit module de commande de processus programmable (25) comprenant un programme (27) incluant des algorithmes de calcul pour fournir au module de commande (32) du manipulateur (10) des données de positionnement de l'organe de préhension (18) sous la forme de données calculées à partir des signaux de données envoyés par le générateur de signaux (22), pour un déplacement de l'organe de préhension (18) de façon à éviter une déformation de la feuille métallique (L), un alignement rectiligne étant de ce fait conservé entre le point de préhension (P) sur la feuille métallique (L) et les points (A, B) en lesquels la feuille métallique (L) est en contact avec les éléments de matrice déplaçable et fixe (20, 19) de la presse plieuse (11).

2. Unité de pliage automatique de feuilles métalliques selon la revendication 1, dans laquelle on utilise un ensemble de matrice (19, 20) ayant une ligne génératrice qui s'étend suivant la longueur d'une cavité formant rainure, **caractérisée en ce que** lesdits algorithmes de calcul mémorisés dans ledit programme (27) définissent les coordonnées du point de préhension (P) par l'organe de préhension (18) et l'angle de rotation (θ) de la feuille métallique (L) par rapport à un ensemble de trois axes cartésiens (X, Y, Z) et à un axe de rotation parallèle à la ligne génératrice de la matrice de pliage, sur la base des formules suivantes:$\text{θ = arctg} \frac{\overline{\text{AA}} \text{'}}{\text{a}}$${\text{Z}}_{\text{q}} \text{= l} \frac{\overline{\text{AA}} \text{'}}{\sqrt{{\text{a}}^{\text{2}} \text{+} \overline{\text{AA}} {\text{'}}^{\text{2}}}} \text{-} \overline{\text{AA}} \text{' -} \frac{\text{b}}{\sqrt{\text{(} \frac{\overline{\text{AA}} \text{'}}{\text{a}} {\text{)}}^{\text{2}} \text{+ 1}}}$${\text{Y}}_{\text{q}} \text{= l} \frac{\text{a}}{\sqrt{{\text{a}}^{\text{2}} \text{+} \overline{\text{AA}} {\text{'}}^{\text{2}}}} \text{+} \frac{\text{b}}{\sqrt{\text{(} \frac{\overline{\text{AA}} \text{'}}{\text{a}} {\text{)}}^{\text{2}} \text{+ 1}}} \text{·} \frac{\overline{\text{AA}} \text{'}}{\text{a}}$ dans lesquelles "a" est un paramètre préalablement mémorisé dans le module de commande de processus (25), représentatif de la largeur maximale de la cavité formant rainure de la matrice de pliage (19, 20), et dans lesquelles "l" est une valeur constante égale à la distance entre le point de préhension (P) de la feuille métallique (L) et un point de flexion par contact (A) au début du pliage de la même feuille métallique (L).

3. Unité de pliage automatique de feuilles métalliques selon les revendications 1 et 2, **caractérisée en ce que** le paramètre "a" représentatif de la largeur maximale de la cavité formant rainure de la matrice de pliage (19, 20), et l'origine sur l'axe de référence (Z') par rapport à laquelle le déplacement de l'élément de matrice déplaçable (20) est détecté par le générateur de signaux (22) durant le pliage, sont préalablement mémorisés dans une mémoire EEPROM programmable et effaçable du module de commande de processus (32).

4. Unité de pliage automatique de feuilles métalliques selon les revendications 1 et 3, **caractérisée en ce qu'**un sélecteur manuel de remise à zéro (30) est prévu pour remettre à zéro la presse et pour mémoriser l'origine détectée sur l'axe (Z') dudit générateur de signaux (22) dans la mémoire programmable (EEPROM) dudit module de commande de processus.

5. Unité de pliage automatique de feuilles métalliques selon la revendication 1, dans laquelle ledit manipulateur est du type cartésien.

6. Unité de pliage automatique de feuilles métalliques selon la revendication 1, dans laquelle ledit manipulateur est du type anthropomorphique.
